# EUROPEAN PATENT SPECIFICATION

(11) **EP 2 750 419 B1**
(45) Date of publication and mention of the grant of the patent: **11.07.2018**
(21) Application number: 13194533.9
(22) Date of filing: 26.11.2013
(51) Int. Cl.: H04W 4/02, H04L 29/08, G06F 3/01

(54) **Exchanging content across multiple devices**
Austausch von Inhalt über mehrere Vorrichtungen
Échange de contenu sur des dispositifs multiples

(30) Priority: 27.12.2012 US 201213727802
(43) Date of publication of application: 02.07.2014
(73) Proprietor: Google LLC, Mountain View, CA 94043 (US)
(72) Inventor: Stekkelpak, Zoltan, Mountain View, CA California 94043 (US); Chetverykov, Artem, Mountain View, CA California 94043 (US)
(74) Representative: Clark, Jonathan Lister

(56) References cited:
- US-A1- 2009 265 470
- US-A1- 2011 065 459
- US-A1- 2011 081 923
- US-A1- 2011 154 014
- US-A1- 2012 075 202

## Description

### BACKGROUND

Presently many devices accept gestures as inputs to perform different functions. Using gestures to share content between multiple users often requires a number of user inputs to confirm content to be shared and also the device with which or person with whom the content is to be shared. These additional steps as well as erroneous identification of devices with which to share the data make the present sharing processes too complex and time consuming. US20110081923 A1 discloses methods and devices to provide a gesture enabling users to share files with other nearby computing devices.

### BRIEF SUMMARY

According to an implementation of the disclosed subject matter, a method is provided that may include detecting the presence and the location of a plurality of target devices that are in proximity to a user device. A gesture associated with the source device may be detected and a direction associated with the gesture may be determined by a processor. A destination device may be selected from the plurality of target devices. The source device and the destination device may be identified.

According to an implementation of the disclosed subject matter, a system may include a user device, a plurality of target devices; and a controller. The controller may be configured to detect the presence and the location of the plurality of target devices that are in proximity to the user device. A gesture associated with the source device may be detected and a direction associated with the gesture may be determined by the controller. A destination device may be selected from the plurality of target devices. The source device and the destination device may be identified.

Additional features, advantages, and implementations of the disclosed subject matter may be set forth or apparent from consideration of the following detailed description, drawings, and claims. Moreover, it is to be understood that both the foregoing summary and the following detailed description are examples and are intended to provide further explanation without limiting the scope of the claims.

### BRIEF DESCRIPTION OF THE DRAWINGS

The accompanying drawings, which are included to provide a further understanding of the disclosed subject matter, are incorporated in and constitute a part of this specification. The drawings also illustrate implementations of the disclosed subject matter and together with the detailed description serve to explain the principles of implementations of the disclosed subject matter. No attempt is made to show structural details in more detail than may be necessary for a fundamental understanding of the disclosed subject matter and various ways in which it may be practiced.
FIG. 1 shows flowchart according to an implementation of the disclosed subject matter.
FIG. 2 shows a system according to an implementation of the disclosed subject matter.
FIG. 3 shows a system according to an implementation of the disclosed subject matter.
FIG. 4 shows a computing device according to an implementation of the disclosed subject matter.

### DETAILED DESCRIPTION

Implementations of the disclosed subject matter allow for delivery of content information from a source device to other devices through the use of gestures that extend beyond the periphery of the user device. The locations of the other devices with respect to the source device may be determined using various techniques. The extended gesture may be detected by an image detection device, and the extended gesture and direction may be recognized. The direction of the extended gesture may be used to determine a destination device to which content information is to be delivered. An extended gesture may be a gesture that begins on or over a touch screen of a source device and continues beyond the edge, or periphery, of the touchscreen. The extended gesture may be a two part gesture that includes an action indicating gesture and a directional gesture. An action may be a sharing (copy), move and delete, or a similar action. The content information may be the content on the user device, a copy of the content, an address where the content can be retrieved, a pointer to the content, or a link to the content.

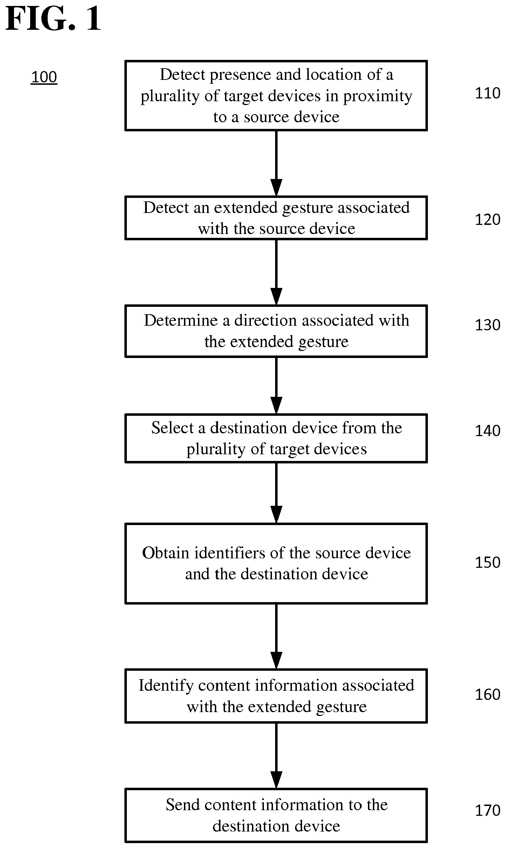

FIG. 1 shows flowchart for delivering content information to a device according to an implementation of the disclosed subject matter. The process 100 may include a combination of devices, such as user device, a server or a plurality of target devices. A source device may be a computing device, such as smartphone, tablet or other handheld device. The source device may be configured to accept gesture inputs from a user. A target device may be a computing device, such as an appliance, a tablet, smartphone, smart televisions, desktop computers, laptops and the like.

At step 110, the presence and location of a plurality of target devices in proximity to a user device may be detected. The plurality of target devices may be devices with which a user wants to share content. Presence may be detected using Bluetooth, NFC, IEEE 802.1 la, b, g, n and the like, such as Wi-Fi, or any suitable communication medium or protocol, such as X-10, Zigbee, Z-wave or the like. For example, using Bluetooth or NFC, a source device or controller may establish a connection with each of the plurality of target devices and by analyzing the signal strength from the Bluetooth or NFC signal may determine the proximity or a location of each of the target devices with respect to the user device. Location may be an absolute location, a relative location or a combination of both. An absolute location may be determined using global positioning satellite (GPS) systems or another similar system (e.g., cellular or Wi-Fi triangulation technology). A relative location may be defined as a location of a device within a viewable distance from the source device and in a specific direction, such as to the right of the user device. Alternatively, the relative location may be defined as an area, such as the living room, den, kitchen, office, printer room, and the like that may not be viewable by a user. In another alternative, a system controller or a remote server, such as the cloud, may have the locations of target devices (television, media streaming device) associated with the source device prestored and may use an absolute location of the source device to determine proximity of the target devices to the user device.

An extended gesture associated with the source device may be detected (Step 120), for example, by an image detection device. An image detection device may be a camera, an infrared detector, or the like. The gesture may be an extended gesture, which may be a gesture that originates at the source device and continues beyond the periphery of the user device. The periphery of the source device can be considered the physical edges of the user device. For example, the extended gesture may include a swipe on a user device's touch screen that continues to move away from the source device in a specific direction. In another alternative, the gesture may be a movement of the user device, such as a throwing, sliding, flipping, tossing or similar motion in a direction of a target device.

A direction associated with the extended gesture may be determined at Step 130. The direction of an extended gesture may be determined by a processor analyzing the collected image data using known image processing algorithms. For example, the gesture direction may be identified using a frame-to-frame positional shift analysis, motion vectors, a spatial gradient, or the like obtained from the analysis of the image data.

At step 140, a destination device, which may be the device at which the gesture was directed, may be selected from the plurality of target devices. The determined direction and the locations of the plurality of target devices with respect to the location of the source device may be analyzed to determine a destination device within a threshold vicinity of the gesture direction. The gesture direction may, for example, be represented by a vector, which may be extrapolated for a distance that is equal to the farthest distance of a target device from the user device. The location of each of the plurality of target devices, or a subset of the plurality of target devices, may be represented by an area surrounding the target device. If a line representing the vector direction passes through a target device's area, the target device may be determined to be the destination device. If the line passes through more than one target device's area, the areas representing the respective target devices may be minimized until the line passes through, or closest to, only one target device area. If more than one target device remains after the areas are minimized, the source device may query the user to select a destination device from the remaining target devices, request that the gesture be repeated, or a similar query to clarify the selection of a destination device. All or a subset of the target devices in the proximity of the source device may be analyzed.

Of course, other methods of matching an extended gesture direction with a target device may be performed. For example, a content item on at least one of the devices may be shared to one or more target devices, but not all target devices in the user's proximity. For example, audio content could potentially be shared with devices that only have speakers. In such cases, the class of the content item (for example, audio, video or document) may narrow down the potential target devices. Thereby reducing the number of target devices that may be considered for sharing. In this case, this system may consider devices with speakers even though another target device without speakers may be on the gesture's vector line. In another example, the system may include a learning feature that may track a user's frequently used and/or preferred content items and the types of sharing and/or target devices that are typically accompanied with the given content type (e.g., audio, video or document). Types of sharing may include, for example, move and delete, copy and share. In such cases, when the system is analyzing a gesture direction, the system may compute a weight to use with a distance calculation between potential destination devices and the direction vector. Based on the weighting, a potential destination device that may, for example, be more frequently used, or have speakers, may be selected as the destination device even though the other potential destination device is physically closer to the direction vector. Voice commands may also be used to further select a destination device from the plurality of target devices. For example, a user may provide an extended gesture and a voice command simultaneously or nearly simultaneously. The voice command may specify the target device (e.g., "tablet", "phone", "laptop", "phone on the right", "phone behind me", "my wife's phone" and the like). Such voice commands may overwrite the target device selection based on the vector's proximity. Different processes such as those described herein may be used either individually or in combination to select a destination device.

Identifiers related to the source device and the destination device may be provided to a remote server (step 150). For example, a local controller or remote server in communication with the source device may interrogate the source device to obtain an identifier of the source device and the destination device.

Additionally, content information associated with the gesture may be identified (step 160). For example, the source device may transfer the content, content information, content identification information, to a controller device or a destination device. A local controller or a remote server may interrogate a source device for data identifying content associated with the extended gesture, the gesture indication signal or both. Alternatively, the gesture indication signal may provide an indication of the content that is the subject of the gesture, or the source device may provide the data to a controller or a server. The content may be a document, a video, audio, an application icon, or the like that is being presented on a touch screen of a user device. The presented content may also be a communication request, for example, an incoming phone call, an incoming instant messaging request, an incoming on-line meeting request, an incoming video chat request, an incoming screen sharing request, or a similar request. In such cases, the incoming communication request on the receiver device could be sent to a target device for performing the communication, such as the actual phone call, video chat or the like. Content information or content identification information related to the presented content may be sent to the destination device. Alternatively, content identification information may be provided to either the destination device or a server. The destination device may use the content identification information to request the content from a controller or a server. If the content identification information is provided to a server, the server may provide the content to the destination device in response to receiving the content identification information.

The content information may be sent to the destination device (step 170). The sent content information may be a pointer, an Internet address, the complete content or a portion of the content. The complete content may be all of the data related to a document, an image file, an audio file, or a video file. A portion of the content may be, for example, a first page of a document, a thumbnail image, a reduced data, or low resolution representation of an audio, an image or video file, or only part of the audio or video file. Prior to sending the content information to the destination device, an authentication and verification process may be performed by the user device, a controller, a server, or a combination of all, at any time during the process to confirm that the destination device has permission to receive the content information.

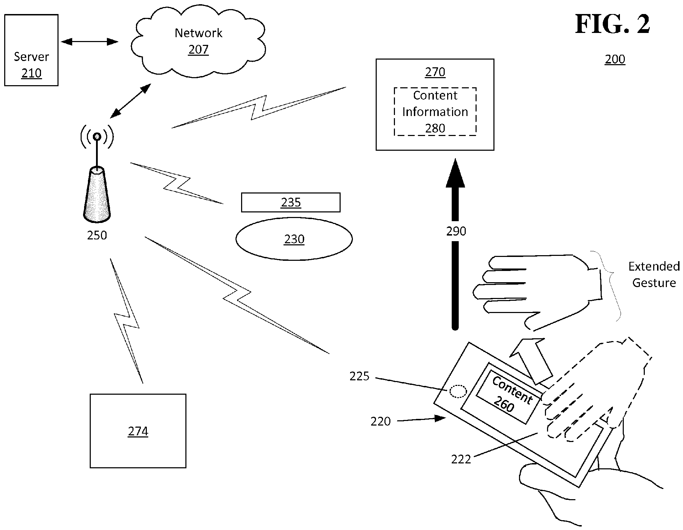

A variety of components may be used to configure a system that implements the above described process. FIG. 2 shows a system according to an implementation of the disclosed subject matter. A system 200 may include components such as a source device 220, a motion detector 230, and a plurality of target devices 270, 274. The system 200 may also include a controller 235 that includes a processor, local memory, data storage, transceiver and the like. The controller 235 may manage the operation of the system 200. The controller 235 may be a stand-alone device or may be integrated into the motion detector 230. The system 200 may include a wireless access point 250 configured to communicate with the source device 220, the motion detector 230, and the plurality of target devices 270, 274. The system 200 may also access a network 207 which may be communicatively connected to server 210. Server 210 may have access to data storage storing the content and data, such as data files and account information related to source device 220. The source device 220 and the plurality of target devices 270, 274 may be devices such as a smart phone, tablets, a laptop, a notebook computer, a desktop computer, a television, a smart appliance, such as a refrigerator with a display device, a personal media playback device, a hand-held gaming device, an audio playback devices, such as MP3 players, and similar devices capable of communicating with other devices directly (via, for example, Bluetooth or NFC) or over a network (such as Wi-Fi or cellular).

The source device 220 may include a touchscreen 222, a camera 225, and include communication circuitry for establishing wired or wireless radio-frequency communication channels with other devices, such as target devices 270, 274, controller 235, motion detector 230, network 207 or server 210. The source device 220 may use GPS, cellular, NFC and/or Bluetooth transceivers to detect a presence and a location of a plurality of target device in proximity to it. The cellular, NFC and Bluetooth transceivers may also exchange information identifying the source device to other devices, such as controller 235 or target devices 270, 274. For example, the source device 220 and the plurality of target devices 270, 274 may be configured with transceivers for communicating via Bluetooth, NFC, the various IEEE 802.11xx communication protocols, such as Wi-Fi, cellular communications, or any suitable communication medium or protocol, such as X-10, Zigbee, Z-wave or the like.

The motion detector 230 may be a camera or other device, such as an infrared receiver, that may collect image data. The motion detector 230 may include types of radar, laser projector with a receiver, camera with gesture recognition, a combination of two or more cameras with 3D detection capabilities, and the like. In an implementation, the source device 220, the motion detector 230, controller 235, and the plurality of target devices 270, 274 may be configured in a network, and may exchange data with one another through the wireless access point 250, which may be a Wi-Fi access point or the like, or via Bluetooth or near field communications. The wireless access point 250 may also communicate with an external network 207, which may be a cellular network or a data network, such as metropolitan area network, a local area network, the Internet, or the like. A server 210 may also be connected via a wired or wireless communication path to the external network 207. The server 210 may be configured to access and deliver content, such as video, audio, documents and the like, in response to requests received from the wireless access point 250. In addition to the motion detector 230, the system 200 may also include additional motion detection components, such as the camera 225 of the source device 220. The source device 220 may include other image detection devices that can provide image data to the system 200 in addition to camera 225. For example, an optional image detection device on the source device 220 (such as a second camera mounted on the back of the source device 220) may provide information related to the presence of target devices 270, 274, and/or the relative location of source device 220, while camera 225 may provide gesture data to the system 200. The motion detector 230 may be configured to detect a gesture input to the touch screen 222 of the source device 220.

The content 260 may be shared with the target device 270 in a variety of ways. The content 260 may be presented as content 280 on destination device 270. In operation, the presence and location of the target devices 270, 274 with respect to the source device 220 may have already been determined as explained above with respect to FIG. 1. The controller 235 may have identifying information, such as a device name, a device address and the like, of the source device 220 and target devices 270, 274 stored in memory. The motion detector 230 may collect image data related to extended gestures applied to the source device 220 and send the data to controller 235 for processing. The controller 235 may process the collected image data by, for example, applying image processing techniques to the collected image data. The source device 220 may also provide at least a portion of the gesture and image data, if not all of the gesture and image data by using the source device camera 225. For example, the field of view of the camera 225 may extend beyond the periphery of the source device 220 and may capture extended gesture image data. The direction of the image data may be determined using a processor on the source device 220. Alternatively, both the camera 225 and the motion detector 230 may collect image data and the gesture data. The image and gesture data obtained by camera 225 may be sent by the source device 220 to the controller 235 for processing.

For example, a user may wish to share the content on source device 220 with target device 270. The content 260 shown on the touch screen 222 may be the subject of a gesture. As shown in FIG. 2, an extended gesture may originate at touchscreen 222 displaying the content 260 and may be, for example, a swipe across the source device 220 that extends beyond the periphery of the source device 220 toward the target device 270. An initial position of a user hand is shown in dashed lines and an end position of the extended gesture is shown in solid lines. Image data including the extended gesture may be collected by the motion detector 230, the camera 225 or both. The controller 235, or a processor in the source device 220, may process the collected image data from the respective sources of image data. For ease of description, the following discussion will refer only to the controller 235 as processing the collected image data and controlling the process of sharing the content, but the processing may occur, for example, within the destination device 220 or at server 210. An extended gesture direction represented by arrow 290 may be determined by the controller 235 after analyzing the collected image data. Using the direction 290, a destination device may be selected from the plurality of target devices 270, 274. In the example, the destination device may be determined to be device 270 based on the extended gesture direction.

In an alternate implementation, a two-part gesture may be used. The two part gesture may include a gesture indication signal and the extended gesture. The gesture indication signal may be provided to the image detection device 230 and/or controller 235 to notify the image detection device 230 that an extended gesture may be forthcoming. The two-part gesture may reduce the amount of data that has to be collected by the image detection device 230 and processed by the controller 235. For example, the gesture indication signal may be generated in response to an input to the source device touchscreen 222 and may signal that a next motion is an extended gesture that is to be collected by the image detection 230 and recognized by the controller 235. The source device may also send a signal including at least data indicating the type of gesture, an action associated with the gesture, the application in which the gesture is being used, or the interpretation of the gesture by the application.

Various methods of delivering content to the destination device are envisioned. For example, the content 260 may be a file stored on the source device 220. A file containing content 260 may be transferred from the source device 220 to the destination device 270 by the controller 235 using the identifying information stored in memory. The content 260 may be transferred, for example, via NFC or Bluetooth to destination device 270 and presented as content 280. The content 280 may be the original content 260. In which case, the content 260 may be deleted from the source device 220. Alternatively, the content 280 may be a copy of the content 260 or a portion thereof. Upon receipt of the shared content, the destination device 270 may open a computer application to present the content, or may simply present the content, for example, in the case of an audio device receiving an audio file, or a television receiving image or video data.

Alternatively, content information may be output from the source device 220. Content information may be a pointer, an address, the content, a portion of content (e.g., a part of a video or audio recording), or the like may be information that allows for retrieval of the content from storage. In another alternative, content identification information which identifies content information to be shared by the source device with the destination device may be output from the source device 220. Content identification information may be a reduced set of information sufficient to identify the content. For example, the content identification information may be a file name, a title, an alphanumerical identifier or the like. When using content identification information additional data retrieval steps may be required to retrieve the content for delivery to the destination device. In contrast, content information may allow for expedited retrieval of the content.

The controller 235 may request the content from data storage, if stored locally, or may request access to the content via network 207 and server 210 using either the content information or the content identification information. The content information 280 may be sent directly to the destination device 270 based on the content identification information, or may be sent to the controller 235 and delivered to the destination device 270. For example, the controller 235 may access an account associated with the source device 220. The account may be maintained by the remote server 210. The account (not shown) may include information related to at least the content 260 being presented on the source device 220, all devices associated with the account, permissions related to the respective devices or locations of content associated with the account, and the like. A processor, such as controller 235 or in source device 220, may identify content information related to the content 260 presented on the source device 220. The identification of the content information may be made by analyzing signals output by the source device 220, which may contain data identifying the content. The content information, such as a pointer, an address, all or a portion of the content, may be sent to the destination device.

Alternatively, the controller 235 or the source device 220 may transfer a recognized extended gesture signal to a server 210 via network 207. The server 210 may interrogate either the controller 235, which may have stored content information related to content 260, or the source device 220 to identify the content 260 presented on the source device 220 for transfer. The server 210 may retrieve the content from a data storage (not shown) and send the content either to the controller 235 for delivery to the destination device 270, or directly to the destination device 270 if the destination device is accessible by the server 210. The content 260 may be shared as content 280 with the destination device 270. The content 280 may be the content 260 that was presented on source device 220 or may be a copy of the content or a portion thereof. Note that although the above example used only target device 270 and 274, this system is not limited to a specific number of target devices.

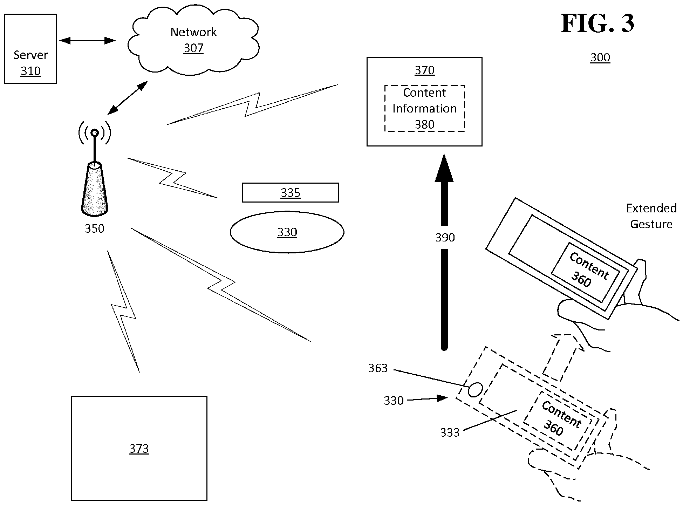

FIG. 3 shows a system according to an implementation of the disclosed subject matter. The system 300 may include all or a portion of the components and function in a similar manner as the system 200 shown in FIG. 2. For example, system 300 components such as a source device 320, a motion detector 330, a controller 335 and a plurality of target devices 370, 374. Through access point 350, the system 300 may connect to a server 310 via a network 307.

In addition to gestures, other sensors of the source device 320 such as a microphone, an accelerometer, a camera, a compass, a motion detection or proximity sensor (an infrared sensor that detects when a smartphone is close to a user's ear) may be used to indicate that the content on the source device 320 is to be shared. For example, as shown in FIG. 3, a throwing motion may be used to indicate that a user wishes to share the content on the source device 320 with a target device. A destination device from the plurality of target devices 370 and 374 may be determined by the direction in which the source device is "thrown." In FIG. 3, the throwing motion is in the direction 390 of target device 370. The content 360 may be shared with the destination device 370 as described with respect to FIGs. 1 and 2.

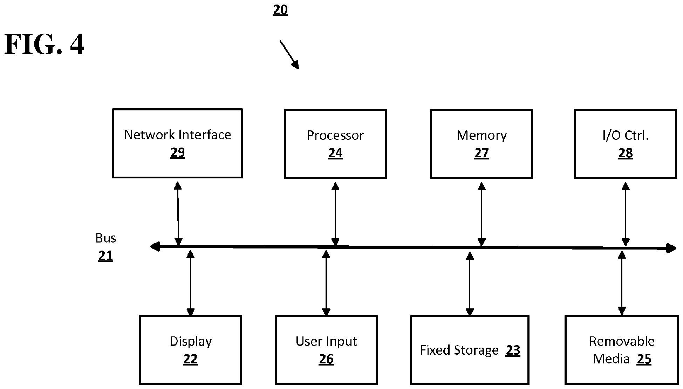

Implementations of the presently disclosed subject matter may be implemented in and used with a variety of component and network architectures. FIG. 4 is an example computing device 20 suitable for implementing implementations of the presently disclosed subject matter. The computing device 20 includes a bus 21 which interconnects major components of the computing device 20, such as a central processor 24, a memory 27 (typically RAM, but which may also include ROM, flash RAM, or the like), an input/output controller 28, a user display 22, such as a display screen via a display adapter, a user input interface 26, which may include one or more controllers and associated user input devices such as a keyboard, mouse, and the like, and may be closely coupled to the I/O controller 28, fixed storage 23, such as a hard drive, flash storage, Fibre Channel network, SAN device, SCSI device, and the like, and a removable media component 25 operative to control and receive an optical disk, flash drive, and the like.

The bus 21 allows data communication between the central processor 24 and the memory 27, which may include read-only memory (ROM) or flash memory (neither shown), and random access memory (RAM) (not shown), as previously noted. The RAM is generally the main memory into which the operating system and application programs are loaded. The ROM or flash memory can contain, among other code, the Basic Input-Output system (BIOS) which controls basic hardware operation such as the interaction with peripheral components. Applications resident with the computing device 20 are generally stored on and accessed via a computer readable medium, such as a hard disk drive (e.g., fixed storage 23), an optical drive, floppy disk, or other storage medium 25.

The fixed storage 23 may be integral with the computing device 20 or may be separate and accessed through other interfaces. A network interface 29 may provide a direct connection to a remote server via a telephone link, to the Internet via an internet service provider (ISP), or a direct connection to a remote server via a direct network link to the Internet via a POP (point of presence) or other technique. The network interface 29 may provide such connection using wireless techniques, including digital cellular telephone connection, Cellular Digital Packet Data (CDPD) connection, digital satellite data connection or the like. For example, the network interface 29 may allow the computing device to communicate with other computing devices, user devices, target devices or the like via one or more local, wide-area, or other networks, as shown in FIG. 2.

Many other devices or components (not shown) may be connected in a similar manner (e.g., document scanners, digital cameras and so on). Conversely, all of the components shown in FIG.4 need not be present to practice the present disclosure. The components can be interconnected in different ways from that shown. The operation of a computing device such as that shown in FIG. 4 is readily known in the art and is not discussed in detail in this application. Code to implement the present disclosure can be stored in computer-readable storage media such as one or more of the memory 27, fixed storage 23, removable media 25, or on a remote storage location.

More generally, various implementations of the presently disclosed subject matter may include or be embodied in the form of computer-implemented processes and apparatuses for practicing those processes. Implementations also may be embodied in the form of a computer program product having computer program code containing instructions embodied in non-transitory and/or tangible media, such as floppy diskettes, CD-ROMs, hard drives, USB (universal serial bus) drives, or any other machine readable storage medium, wherein, when the computer program code is loaded into and executed by a computer, the computing device becomes an apparatus for practicing implementations of the disclosed subject matter. Implementations also may be embodied in the form of computer program code, for example, whether stored in a storage medium, loaded into and/or executed by a computing device, or transmitted over some transmission medium, such as over electrical wiring or cabling, through fiber optics, or via electromagnetic radiation, wherein when the computer program code is loaded into and executed by a computing device, the computing device becomes an apparatus for practicing implementations of the disclosed subject matter. When implemented on a general-purpose microprocessor, the computer program code segments configure the microprocessor to create specific logic circuits. In some configurations, a set of computer-readable instructions stored on a computer-readable storage medium may be implemented by a general-purpose processor, which may transform the general-purpose processor or a device containing the general-purpose processor into a special-purpose device configured to implement or carry out the instructions. Implementations may be implemented using hardware that may include a processor, such as a general purpose microprocessor and/or an Application Specific Integrated Circuit (ASIC) that embodies all or part of the techniques according to implementations of the disclosed subject matter in hardware and/or firmware. The processor may be coupled to memory, such as RAM, ROM, flash memory, a hard disk or any other device capable of storing electronic information. The memory may store instructions adapted to be executed by the processor to perform the techniques according to implementations of the disclosed subject matter.

The foregoing description, for purpose of explanation, has been described with reference to specific implementations. However, the illustrative discussions above are not intended to be exhaustive or to limit implementations of the disclosed subject matter to the precise forms disclosed. Many modifications and variations are possible in view of the above teachings. The implementations were chosen and described in order to explain the principles of implementations of the disclosed subject matter and their practical applications, to thereby enable others skilled in the art to utilize those implementations as well as various implementations with various modifications as may be suited to the particular use contemplated.

## Claims

1. A method comprising:
detecting presence and location of a plurality of target devices in proximity to a source device (110);
detecting an extended gesture associated with the source device (120);
determining a direction associated with the extended gesture (130);
selecting a destination device from the plurality of target devices (140); and
obtaining identifiers of the source device and the destination device (150),
**characterised in that** the extended gesture is a gesture that originates at the source device (220) and continues beyond an edge of the source device.

2. The method of claim 1, further comprising:
identifying content information associated with the extended gesture (160); and
sending content information to the destination device (170), wherein content information (280) is a pointer, an Internet address, the complete content, or a portion of content.

3. The method of claim 1 or 2, further comprising:
identifying a communication request associated with the extended gesture; and
forwarding the communication request to the destination device.

4. The method of one of claims 1 to 3, further comprising:
receiving identifiers related to source device (220) and destination device (270, 274);
interrogating the source device (220) to identify content (280) associated with the extended gesture; and
sending content information to the destination device (270, 274).

5. The method of one of claims 1 to 4, further comprising:
sending content identification information (280) to a remote server (210).

6. The method of one of claims 1 to 5, further comprising:
obtaining content identification information (280) from the source device (220), wherein the content identification information identifies content information to be shared by the source device with the destination device (270, 274); and
sending the content information (280) to the destination device (270, 274) based on the content identification information.

7. The method of one of claims 1 to 6, wherein selecting a destination device (270, 274) from the plurality of target devices (270, 274) comprises:
identifying specific target devices from the plurality of target devices based on the determined direction (290); and
based on an analysis of the determined direction, determining which of the specific target devices is the destination device.

8. The method of claim 7, wherein the analysis of the direction (290) comprises:
determining whether a vector associated with the direction intersects a predetermined threshold area encompassing a location of at least one of the target devices.

9. The method of claims 1 to 8, further comprising:
accessing an account associated with the user device, wherein the account includes information related to at least content being presented on the user device, all devices associated with the account, permissions related to the content, or locations of content associated with the account;
obtaining the content to be shared; and
delivering the content to the destination device.

10. The method of claim 9, further comprising:
in response to receiving the sent content, launching a program on the destination device to present the received content.

11. The method of claims 1 to 10, further comprising:
determining an action associated with the extended gesture.

12. The method of claims 1 to 11, wherein the direction associated with the extended gesture is determined with respect to the user device.

13. The method of claims 1 to 12, wherein the direction associated with the extended gesture is determined using a known location of the source device and the identified location of the target device.

14. The method of claims 1 to 13, further comprising:
determining a direction in which the source device is pointed; and
identifying target devices for selection as a destination device using the direction associated with the extended gesture and the direction in which the source device is pointed.

15. The method of claims 1 to 14, wherein the extended gesture is a two part gesture that includes an action indicating gesture and a directional gesture.

16. A system comprising:
a source device (220);
a plurality of target devices (270, 274); and
a controller (235) configured to perform the method of one of claims 1 to 15.

17. The system of claim 16, wherein the controller is further configured to:
interrogate the source device (220) to identify content associated with the gesture; and
send content information to destination device (270, 274).

18. The system of claim 16, wherein the controller is further configured to:
send content identification information to a remote server (210); and
deliver content to destination device (270, 274).

## Patentansprüche

1. Verfahren, umfassend:
Feststellen des Vorhandenseins und des Standorts einer Vielzahl von Zielgeräten in der Nähe eines Quellgeräts (110) ;
Feststellen einer mit dem Quellgerät (120) assoziierten ausgestreckten Geste;
Ermitteln einer mit der ausgestreckten Geste (130) assoziierten Richtung;
Auswählen eines Bestimmungsgeräts aus der Vielzahl von Zielgeräten (140); und
Erhalten von Kennungen des Quellgeräts und des Bestimmungsgeräts (150),
**dadurch gekennzeichnet, dass** die ausgestreckte Geste eine Geste ist, die an dem
Quellgerät (220) entsteht und über den Rand des Quellgeräts hinausgeht.

2. Verfahren nach Anspruch 1, ferner umfassend:
Identifizieren von mit der ausgestreckten Geste (160) assoziierten Inhaltsinformationen; und
Senden der Inhaltsinformationen an das Bestimmungszielgerät (170), wobei es sich bei der Inhaltsinformation (280) um einen Hinweis, eine Internetadresse, den gesamten Inhalt oder einen Teil des Inhalts handelt.

3. Verfahren nach Anspruch 1 oder 2, ferner umfassend:
Identifizieren einer mit der ausgestreckten Geste assoziierten Kommunikationsanfrage; und
Weiterleiten der Kommunikationsanfrage an das Bestimmungsgerät.

4. Verfahren nach einem der Ansprüche 1 bis 3, ferner umfassend:
Empfangen von dem Quellgerät (220) und dem Bestimmungsgerät (270, 274) zugehöriger Kennungen;
Abfragen des Quellgeräts (220) zwecks Identifizierens mit der ausgestreckten Geste assoziierten Inhalts (280); und
Senden von Inhaltsinformationen an das Bestimmungsgerät (270, 274).

5. Verfahren nach einem der Ansprüche 1 bis 4, ferner umfassend:
Senden von Inhaltsinformationen (280) an einen entfernten Server (210).

6. Verfahren nach einem der Ansprüche 1 bis 5, ferner umfassend:
Erhalten von Inhaltsidentifizierungsinformationen (280) von dem Quellgerät (220), wobei die Inhaltsidentifizierungsinformationen Inhaltsinformationen identifizieren, die von dem Quellgerät mit dem Bestimmungsgerät (270, 274) zu teilen sind; und
Senden der Inhaltsinformationen (280) an das Bestimmungsgerät (270, 274) basierend auf den Inhaltsidentifizierungsinformationen.

7. Verfahren nach einem der Ansprüche 1 bis 6, wobei das Auswählen eines Bestimmungszielgeräts (270, 274) aus der Vielzahl von Zielgeräten (270, 274) umfasst:
Identifizieren spezifischer Zielgeräte aus der Vielzahl von Zielgeräten basierend auf der ermittelten Richtung (290); und
basierend auf einer Analyse der ermittelten Richtungen, Bestimmen, welches der spezifischen Zielgeräte das Bestimmungsgerät ist.

8. Verfahren nach Anspruch 7, wobei die Analyse der Richtung (290) umfasst:
Ermitteln, ob ein mit der Richtung assoziierter Vektor einen vorbestimmten Schwellenbereich überschneidet, der einen Standort von mindestens einem der Zielgeräte umschließt.

9. Verfahren den Ansprüchen 1 bis 8, ferner umfassend:
Zugreifen auf ein mit dem Benutzergerät assoziiertes Konto, wobei das Konto Informationen beinhaltet, die zumindest auf dem Benutzergerät präsentierten Inhalt, sämtliche mit dem Konto assoziierte Geräte, den Inhalt betreffende Berechtigungen oder Standorte von mit dem Konto assoziierten Inhalt betreffen;
Erhalten des zu teilenden Inhalts; und
Ausliefern des Inhalts an das Bestimmungsgerät.

10. Verfahren nach Anspruch 9, ferner umfassend:
in Reaktion auf das Empfangen des gesandten Inhalts, Starten eines Programms auf dem Bestimmungsgerät zwecks Präsentierens des empfangenen Inhalts.

11. Verfahren nach den Ansprüchen 1 bis 10, ferner umfassend:
Ermitteln einer mit der ausgestreckten Geste assoziierten Aktion.

12. Verfahren nach den Ansprüchen 1 bis 11, wobei die mit der ausgestreckten Geste assoziierte Richtung in Bezug auf das Benutzergerät ermittelt wird.

13. Verfahren nach den Ansprüchen 1 bis 12, wobei die mit der ausgestreckten Geste assoziierte Richtung unter Verwendung eines bekannten Standorts des Quellgeräts und des identifizierten Standorts des Zielgeräts ermittelt wird.

14. Verfahren nach den Ansprüchen 1 bis 13, ferner umfassend:
Ermitteln einer Richtung, in die das Quellgerät gerichtet ist; und
Identifizieren von Zielgeräten für die Auswahl als Bestimmungsgerät unter Verwendung der mit der ausgestreckten Geste assoziierten Richtung und der Richtung, in die das Quellgerät gerichtet ist.

15. Verfahren nach den Ansprüchen 1 bis 14, wobei die ausgestreckte Geste eine aus zwei Teilen bestehende Geste ist, die eine eine Aktion anzeigende Geste und eine richtungsangebende Geste beinhaltet.

16. System, umfassend:
ein Quellgerät (220);
eine Vielzahl von Zielgeräten (270, 274); und
eine Steuerung (235), die konfiguriert ist, das Verfahren nach einem der Ansprüche 1 bis 15 durchzuführen.

17. System nach Anspruch 16, wobei die Steuerung ferner konfiguriert ist, um:
das Quellgerät (220) zwecks Identifizierens von mit der Geste assoziierten Inhalt abzufragen; und
Inhaltsinformationen an das Bestimmungsgerät (270, 274) zu senden.

18. System nach Anspruch 16, wobei die Steuerung ferner konfiguriert ist, um: Inhaltsidentifizierungsinformationen an einen entfernten Server (210) zu senden; und
den Inhalt an das Bestimmungsgerät (270, 274) zu liefern.

## Revendications

1. Procédé comprenant :
la détection de la présence et de l'emplacement d'une pluralité de dispositifs cibles à proximité d'un dispositif de source (110) ;
la détection d'un geste étendu associé au dispositif de source (120) ;
la détermination d'une direction associée au geste étendu (130) ;
la sélection d'un dispositif de destination parmi la pluralité de dispositifs cibles (140) ; et
l'obtention d'identificateurs du dispositif de source et du dispositif de destination (150),
**caractérisé en ce que** le geste étendu est un geste qui provient du dispositif de source (220) et continue au-delà du bord du dispositif de source.

2. Procédé selon la revendication 1, comprenant en outre :
l'identification d'une information concernant le contenu associées au geste étendu (160) ; et
l'envoi de l'information concernant le contenu au dispositif de destination (170), où l'information concernant le contenu (280) est un pointeur, une adresse Internet, le contenu complet ou une partie du contenu.

3. Procédé selon la revendication 1 ou 2, comprenant en outre :
l'identification d'une demande de communication associées au geste étendu ; et
la transmission de la demande de communication au dispositif de destination.

4. Procédé selon l'une quelconque des revendications 1 à 3, comprenant en outre :
la réception d'identificateurs liés au dispositif de source (220) et au dispositif de destination (270, 274) ;
l'interrogation du dispositif de source (220) pour identifier le contenu (280) associé au geste étendu ; et
l'envoi d'informations concernant le contenu au dispositif de destination (270, 274).

5. Procédé selon l'une quelconque des revendications 1 à 4, comprenant en outre :
l'envoi des informations d'identification de contenu (280) à un serveur distant (210).

6. Procédé selon l'une quelconque des revendications 1 à 5, comprenant en outre :
l'obtention d'informations d'identification de contenu (280) à partir du dispositif de source (220), où les informations d'identification de contenu identifient les informations concernant le contenu devant être partagées par le dispositif de source avec le dispositif de destination (270, 274) ; et
l'envoi des informations concernant le contenu (280) au dispositif de destination (270, 274) sur la base des informations d'identification de contenu.

7. Procédé selon l'une quelconque des revendications 1 à 6, dans lequel la sélection d'un dispositif de destination (270, 274) parmi la pluralité de dispositifs cibles (270, 274) comprend :
l'identification de dispositifs cibles spécifiques parmi la pluralité de dispositifs cibles sur la base de la direction déterminée (290) ; et
sur la base d'une analyse de la direction déterminée, la détermination duquel des dispositifs cibles spécifiques est le dispositif de destination.

8. Procédé selon la revendication 7, dans lequel l'analyse de la direction (290) comprend :
la détermination si un vecteur associé à la direction croise une zone seuil prédéterminée englobant un emplacement d'au moins un des dispositifs cibles.

9. Procédé selon les revendications 1 à 8, comprenant en outre :
l'accès à un compte associé au dispositif utilisateur, où le compte inclut des informations liées à au moins du contenu étant présenté sur le dispositif utilisateur, à tous les dispositifs associés au compte, à des permissions liées au contenu ou des emplacements de contenu associés au compte ;
l'obtention du contenu devant être partagé ; et
la livraison du contenu au dispositif de destination.

10. Procédé selon la revendication 9, comprenant en outre :
en réponse à la réception du contenu envoyé, le lancement d'un programme sur le dispositif de destination pour présenter le contenu reçu.

11. Procédé selon les revendications 1 à 10, comprenant en outre :
la détermination d'une action associée au geste étendu.

12. Procédé selon les revendications 1 à 11, dans lequel la direction associée au geste étendu est déterminée en fonction du dispositif utilisateur.

13. Procédé selon les revendications 1 à 12, dans lequel la direction associée au geste étendu est déterminée en utilisant un emplacement connu du dispositif de source et l'emplacement identifié du dispositif cible.

14. Procédé selon les revendications 1 à 13, comprenant en outre :
la détermination d'une direction dans laquelle le dispositif de source est pointé ; et
l'identification de dispositifs cibles pour la sélection d'un dispositif de destination en utilisant la direction associée au geste étendu et la direction dans laquelle est pointé le dispositif de source.

15. Procédé selon les revendications 1 à 14, dans lequel le geste étendu est un geste à deux parts qui inclut un geste indiquant une action et un geste directionnel.

16. Système comprenant :
un dispositif de source (220) ;
une pluralité de dispositifs cibles (270, 274) ; et
un contrôleur (235) configuré pour exécuter le procédé selon l'une quelconque des revendications 1 à 15.

17. Système selon la revendication 16, dans lequel le contrôleur est configuré en outre pour :
l'interrogation du dispositif de source (220) pour identifier le contenu associé au geste ; et
l'envoi des informations concernant le contenu au dispositif de destination (270, 274).

18. Système selon la revendication 16, dans lequel le contrôleur est configuré en outre pour :
l'envoi des informations d'identification de contenu à un serveur distant (210) ; et
la livraison du contenu au dispositif de destination (270, 274) .
